# EUROPÄISCHE PATENTSCHRIFT

(11) **EP 2 434 597 B1**
(45) Veröffentlichungstag und Bekanntmachung des Hinweises auf die Patenterteilung: **13.02.2013**
(21) Anmeldenummer: 11007345.9
(22) Anmeldetag: 09.09.2011
(51) Int. Cl.: H02G 3/04, H02G 3/06

(54) **Kabelkanalsystem mit Wandanschlussblende**
Cable channel system with wall connection cover
Système de canal de câble doté d'un écran de raccordement de paroi

(30) Priorität: 25.09.2010 DE 202010013632 U
(43) Veröffentlichungstag der Anmeldung: 28.03.2012
(73) Patentinhaber: Tehalit GmbH, 67716 Heltersberg (DE)
(72) Erfinder: Schwarz, Jürgen, 67705 Trippstadt (DE); Layes, Peter, 67716 Heltersberg (DE); Stamer, Gernod, 66879 Kottweiler-Schwanden (DE)
(74) Vertreter: Nuss, Pierre

(56) Entgegenhaltungen:
- EP-A1- 2 273 636
- DE-U1- 29 922 514
- FR-A1- 2 902 245

## Beschreibung

Die vorliegende Erfindung betrifft ein Kabelkanalsystem zur Wand-, Boden- oder Deckenmontage mit einer Wandanschlussblende.

Ein Kabelkanal besteht aus einem Unterteil und einem Kanaloberteil (oder Deckel) und dient zur Unterbringung elektrischer Kabel und/oder zur Aufnahme von elektrischen Geräten wie Steckdosen, Schalter und dergleichen. Solche Kabelkanäle sind hinreichend bekannt und beispielsweise in der EP 2 182 600 A1, EP 2 043 215 A1 oder EP 1 750 340 A1 beschrieben. Häufig verbinden Kabelkanalsysteme mehrere Räume eines Hauses, was zur Folge hat, dass der Kabelkanal mit seinem Ende an eine Wand angrenzt oder durch diese über einen Durchbruch in den Nachbarraum hindurchgehen muss. Beim Anstoßen des Endes eines Kabelkanalabschnittes an eine Wand entstehen unschöne Spalte zwischen dem Kabelkanal und der Wand. Häufig besteht auch das Problem, dass die Wände nicht exakt im 90° Winkel zueinander angeordnet sind, wodurch die Stoßkanten noch größer und damit unschöner werden. Bei Wanddurchbrüchen besteht das Problem, dass auch hier unschöne Spalten entstehen, welche ordentlich verputzt werden müssen, damit sie nicht mehr sichtbar sind. Muss der Kabelkanal aus irgendwelchen Gründen demontiert oder versetzt werden, sind solche Putzarbeiten zur Kaschierung der Spalten erneut erforderlich, was aufwändig und zeitintensiv ist. Eine solche Situation ist beispielsweise in der DE 201 10 373 U1 beschrieben.

Die FR 2 902 245 A1 beschreibt eine Abdeckhaube, bei der am Rahmenelement eine Haltezunge angebracht ist, um dieses am Kanalunterteil oder am Kanaloberteil zu fixieren.

In der DE 299 22 514 U1 wird eine Blende zum Kaschieren von Wanddurchbrüchen beschrieben, wobei die Blende ein Band umfasst, das sich im Wesentlichen senkrecht zum Kanal erstreckt und den Wanddurchbruch abdeckt. Die Innenkante des Bandes liegt dabei am Kanal an. Problematisch ist hierbei jedoch die Befestigung der Blende an dem Kanal.

Es ist Aufgabe der vorragenden Erfindung, ein verbessertes Kabelkanalsystem zur Wand-, Boden- oder Deckenmontage bereitzustellen, bei dem Stoßkanten und insbesondere Durchbrüche in Wänden, Decken oder Böden kaschiert werden.

Diese Aufgabe wird gelöst durch ein Kabelkanalsystem mit einer Wandanschlussblende gemäß Anspruch 1. Bevorzugte Ausführungsformen finden sich in den Unteransprüchen wieder.

Das erfindungsgemäße Kabelkanalsystem kommt bei der Wand-, Boden- oder Deckenmontage zum Einsatz.

Der Kanal besteht aus einem Kanalunterteil, das an einer Wand, einem Boden oder einer Decke installierbar ist. Der Kanal ist vorzugsweise U-förmig ausgestaltet, jedoch kann die erfindungsgemäße Wandabschlussblende auch für schräge, trapezförmige oder dreieckige Kanäle eingesetzt werden. Auf das Kanalunterteil wird ein Kanaloberteil oder ein Deckel gesetzt. Eine Wandanschlussblende kaschiert das Kanalende und soll unschöne Stoßkanten zwischen dem Kanalunterteil und der Wand, dem Boden oder der Decke vermeiden. Die erfindungsgemäße Wandanschlussblende ist dadurch gekennzeichnet, dass sie aus einem an die Kanalgeometrie angepassten Rahmenelement besteht, welches das Kanalunterteil wenigstens teilweise umfasst. Vorzugsweise wird dieses Rahmenelement bei der Wandmontage eines Kabelkanals von oben auf das Unterteil aufgesteckt, so dass die Stoßkanten oder Wanddurchbrüche über den Rahmen kaschiert sind. Ein Verputzen der Durchbruchstelle ist nicht mehr erforderlich. Das Rahmenelement besteht aus zwei seitlichen Schenkeln, die über einen Quersteg miteinander verbunden sind und einen Aufnahmebereich für das Kanalunterteil definieren. Am Quersteg des Rahmenelementes ist wenigstens eine Haltezunge zur Fixierung des Rahmenelementes am Kanalunterteil oder am Kanaloberteil ausgebildet.

Während ein einziges Rahmenelement (bestehend aus zwei Schenkeln und einem Quersteg) für die Wandmontage ausreicht, ist in einer weiteren Ausführungsform ein Ergänzungselement vorgesehen, um Stoßkanten oder Durchbrüche auch bei einer Konsolenmontage zu kaschieren. Ein solches Ergänzungselement wird erfindungsgemäß über einen oder mehrere Steckarme in das Rahmenelement gesteckt, so dass der gesamte Rahmen den Kanal vollständig umfasst. Zur Befestigung wird das Ergänzungselement vorzugsweise über Steckarme in eine am Führungselement ausgebildete Führung gesteckt. Der Rahmen ist je nach Kanalart vorzugsweise rechteckig oder quadratisch ausgestaltet.

Die Fixierung der Wandanschlussblende an dem Kabelkanal erfolgt vorzugsweise über Haltezungen, die je nach Ausführungsform entweder am Kanalunterteil oder am Kanaloberteil eine Fixierung der Blende sicherstellen. Hierzu sind die am Rahmenelement ausgebildeten Haltezungen vorzugsweise über einen abgewinkelten Steg an einer Stirnplatte L-förmig angewinkelt. Die Wandanschlussblende wird dadurch über dem Kanaloberteil gehalten.

Je nach Größe und Art des Kabelkanals kann die erfindungsgemäße Wandanschlussblende auch so ausgeführt sein, dass die einzelnen Schenkellängen des Ergänzungselementes und/oder des Rahmenelementes anpassbar sind. Dadurch ist die Größe des Aufnahmebereiches an unterschiedliche Situationen, Kabelkanalarten und -größen einstellbar. Die Längenänderung der Schenkel kann beispielsweise teleskopartig oder über Raststufen erfolgen.

Je nach Ausführungsform ist die Wandanschlussblende entweder für eine Wandmontage oder Konsolenmontage ausgeführt. Befindet sich der Durchbruch in der Mitte einer Wand, eines Bodens oder einer Decke, so ist eine umlaufende Kaschierung erforderlich, so dass die Wandanschlussblende als Rahmenelement zusammen mit dem Ergänzungselement ausgeführt sein wird. Befindet sich der Durchbruch beispielsweise in einer Raumecke, so ist das Rahmenelement ausreichend, das zusätzliche Ergänzungselement wird nicht benötigt. Dieses Steckprinzip der Wandabschlussblende gibt dem Monteur bei der Montage die größtmögliche Flexibilität bei der Montage des Kabelkanalsystems.

Vorzugsweise umfasst das Kabelkanalsystem ferner eine Konsole für die Montage. Zur Einstellung des Abstandes zur Wand, zum Boden oder zur Decke ist vorzugsweise ein in der Länge verstellbarer Auslegerarm vorgesehen.

Die Erfindung wird in den nachfolgenden Zeichnungen näher erläutert. Es zeigen:
- Fig. 1: eine isometrische Darstellung der erfindungsgemäßen Wandanschlussblende,
- Fig. 2: eine Wandmontage des Kabelkanalsystems,
- Fig. 3: eine Konsolenmontage des Kanalsystems.

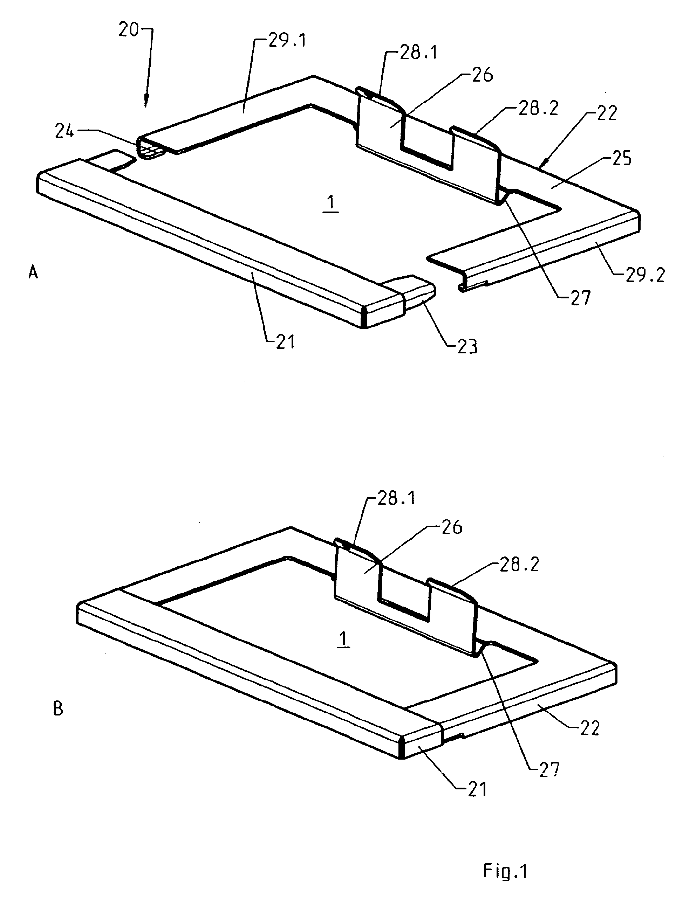

In Fig. 1A ist eine Wandanschlussblende 20 gezeigt, die aus einem Rahmenelement 22 und einem Ergänzungselement 21 besteht. Das Rahmenelement 22 ist U-förmig ausgestaltet und besteht aus zwei seitlichen Schenkeln 29.1, 29.2, welche über einen Quersteg 25 miteinander verbunden sind. Am Quersteg 25 befindet sich eine Haltevorrichtung. Diese besteht aus zwei Haltezungen 28.1, 28.2, die über einen abgewinkelten Steg 27 an einer Stirnplatte 26 in der gezeigten Ausführungsform L-förmig angewinkelt sind.

Das Ergänzungselement 21 wird über die beiden Steckarme 23 in entsprechende Führungen 24 des Rahmenelementes 22 gesteckt.

In Fig. 1 B ist die erfindungsgemäße Wandanschlussblende in zusammengesteckter Form gezeigt. Das Ergänzungselement 21 und das Rahmenelement 22 bilden einen Rahmen, der in der Mitte einen Aufnahmebereich 1 für das Kanalunterteil 10 definiert. Je nach Kanalgeometrie und Form des Kanals ist der Rahmen unterschiedlich geometrisch ausgestaltet.

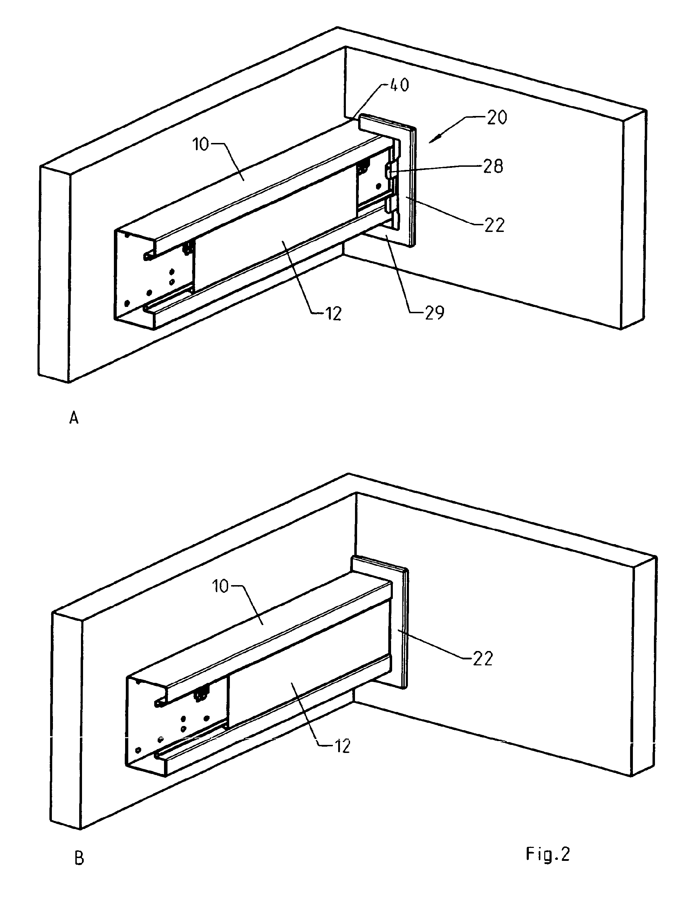

In Fig. 2 ist ein Anwendungsbereich der erfindungsgemäßen Wandanschlussblende 20 bei einer Wandmontage gezeigt. Das Kanalunterteil 10 ist direkt an einer Wand befestigt. In einer Raumecke können grundsätzlich zwei Situationen entstehen: entweder stößt das Ende des Kanalunterteils 10 gegen die Wand und lässt dadurch unschöne Stoßkanten entstehen, oder es existieren Wanddurchbrüche 40, welche ebenfalls unschöne Spalten bilden. In Fig. 2A wird der Wanddurchbruch 40 mit einem Rahmenelement 22 kaschiert. Hierzu wird das Rahmenelement 22 mit den beiden seitlichen Schenkeln 29 auf das Kanalunterteil 10 aufgesetzt. Danach wird, wie in Fig. 2B gezeigt, das Kanaloberteil 12 über die federnden Haltezungen 28 geschoben, wodurch die Wandanschlussblende 20 gehalten wird.

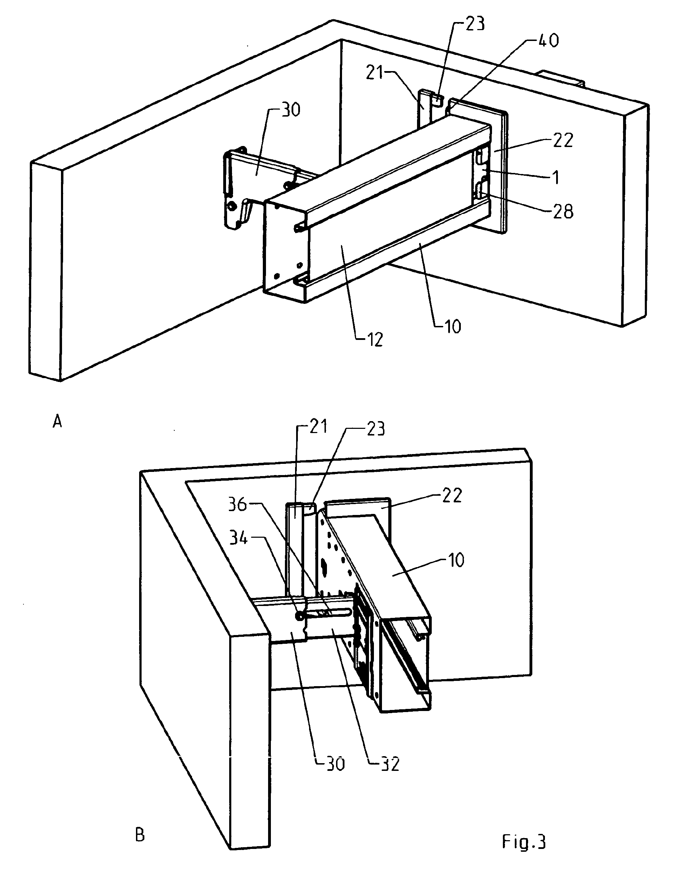

In Fig. 3A ist eine weitere Ausführungsform eines Kabelkanalsystems in Form einer Konsolenmontage gezeigt. Das Kanalunterteil 10 ist in der gezeigten Ausführungsform über eine Konsole 30 mit der Wand verbunden. Zur Kaschierung des Wanddurchbruches 40 wird das Ergänzungselement 21 auf das Rahmenelement 22 über die Steckarme 23 gesteckt. Das Rahmenelement 22 kaschiert in diesem Fall die obere Hälfte und die Seiten des Kanalunterteils 10, während das Ergänzungselement 21 den Durchbruch 40 von unten kaschiert. Der Aufnahmebereich 1 ist dabei so gewählt, dass zwischen der Wandanschlussblende 20 und dem Kanal keine unschönen Spalten entstehen.

In Fig. 3B ist erkennbar, wie die Konsole 30 über einen teleskopartigen Auslegerarm 32 in der Länge verstellbar ist. Dadurch können die Wandabstände zum Kanal nahezu frei gewählt werden. Der Auslegerarm 32 wird über ein Langloch 36 bei einer Feststellschraube 34 eingestellt.

## Patentansprüche

1. Kabelkanalsystem zur Wand-, Boden- oder Deckenmontage, bestehend aus
- einem Kanalunterteil (10), das an einer Wand, einem Boden oder einer Decke installierbar ist,
- einem Kanaloberteil (12), und
- einer Wandanschlussblende (20) zur Kaschierung von Stoßkanten oder Durchbrüchen in der Wand, dem Boden oder der Decke,
wobei die Wandanschlussblende (20) aus einem an die Form des Kanalunterteils (10) angepassten Rahmenelement (22) besteht, welches das Kanalunterteil (10) von außen wenigstens teilweise umfasst, wobei das Rahmenelement (22) aus zwei seitlichen Schenkeln (29.1, 29.2) besteht, die über einen Quersteg (25) miteinander verbunden sind und einen Aufnahmebereich (1) für das Kanalunterteil (10) definieren, **dadurch gekennzeichnet, dass** am Quersteg (25) des Rahmenelementes (22) wenigstens eine Haltezunge (28) zur Fixierung des Rahmenelementes (22) am Kanalunterteil (10) oder am Kanaloberteil (12) ausgebildet ist, und in das Rahmenelement (22) ein Ergänzungselement (21) über ein oder mehrere Steckarme (23) in eine am Rahmenelement (22) ausgebildete Führung (24) steckbar ist.

2. Kabelkanalsystem nach Anspruch 1, **dadurch gekennzeichnet, dass** die am Rahmenelement (22) ausgebildeten Haltezungen (28.1, 28.2) über einen abgewinkelten Steg (27) an einer Stirnplatte (26) L-förmig angewinkelt sind.

3. Kabelkanalsystem nach einem der Ansprüche 1 bis 2, **dadurch gekennzeichnet, dass** die Größe des Aufnahmebereiches (1) über die Schenkellängen des Ergänzungselementes (21) und/oder des Rahmenelementes (22) anpassbar ist.

4. Kabelkanalsystem nach einem der Ansprüche 1 bis 3, **dadurch gekennzeichnet, dass** das Kanalunterteil (10) direkt an einer Wand befestigbar ist.

5. Kabelkanalsystem nach einem der Ansprüche 1 bis 3, **dadurch gekennzeichnet, dass** das Kanalunterteil (10) über eine Konsole (30) an einer Wand befestigbar ist.

6. Kabelkanalsystem nach Anspruch 5, **dadurch gekennzeichnet, dass** die Konsole (30) einen in der Länge verstellbaren Auslegerarm (32) umfasst.

## Claims

1. Cable duct or channel system to be mounted on a wall, floor or ceiling, comprising
- a duct lower part (10) which can be installed on a wall, a floor or a ceiling,
- a duct upper part (12), and
- a wall connection panel (20) for lamination of abutment edges or apertures in the wall, the floor or the ceiling,
wherein the wall connection panel (20) comprises a frame element (22) which is matched to the shape of the duct lower part (10) and which at least partially surrounds the duct lower part (10) from the outside, wherein the frame element (22) comprises two lateral limbs (29.1, 29.2) which are connected to one another by means of a transverse web (25) and define an accommodation region (1) for the duct lower part (10), **characterized in that** at least one retaining tongue (28) for fixing the frame element (22) to the duct lower part (10) or to the duct upper part (12) is formed on the transverse web (25) of the frame element (22), and a complementary element (21) can be inserted into a guide (24) which is formed on the frame element (22) by means of one or more plugging arms (23).

2. Cable duct or channel system according to Claim 1, **characterized in that** the retaining tongues (28.1, 28.2) which are formed on the frame element (22) are angled from an end plate (26) in an L-shape by means of an angled web (27).

3. Cable duct or channel system according to either of Claims 1 and 2, **characterized in that** the size of the accommodation region (1) can be adapted by means of the limb lengths of the complementary element (21) and/or of the frame element (22).

4. Cable duct or channel system according to one of Claims 1 to 3, **characterized in that** the duct lower part (10) can be attached directly to a wall.

5. Cable duct or channel system according to one of Claims 1 to 3, **characterized in that** the duct lower part (10) can be attached to a wall by means of a bracket (30).

6. Cable duct or channel system according to Claim 5, **characterized in that** the bracket (30) comprises an extension arm (32) with an adjustable length.

## Revendications

1. Système de caniveau ou conduit de câbles pour montage en paroi, au plancher ou au plafond, constitué :
- d'une partie inférieure de caniveau (10), qui peut être installée sur une paroi, un plancher ou un plafond,
- d'une partie supérieure de caniveau (12),
- et d'un cache (20) de raccordement en paroi pour le doublage d'arêtes de joint ou d'ouvertures dans la paroi, le plancher ou le plafond,
sachant que le cache (20) de raccordement en paroi est constitué d'un élément de cadre (22) adapté à la forme de la partie inférieure de caniveau (10), élément qui entoure au moins partiellement de l'extérieur la partie inférieure de caniveau (10), sachant que l'élément de cadre (22) est constitué de deux branches latérales (29.1, 29.2) qui sont reliées entre elles par l'intermédiaire d'une branche transversale (25) et qui définissent une région réceptrice (1) pour la partie inférieure de caniveau (10),
**caractérisé en ce qu'**au moins une languette de maintien (28) pour la fixation en position de l'élément de cadre (22) sur la partie inférieure de caniveau (10) ou sur la partie supérieure de caniveau (12) est formée sur la branche transversale (25) de l'élément de cadre (22), et un élément de complément (21) peut être emboîté dans l'élément de cadre (22) en emboîtant un ou plusieurs bras d'emboîtement (23) dans un guide (24) formé sur l'élément de cadre (22).

2. Système de caniveau ou conduit de câbles selon la revendication 1, **caractérisé en ce que** les languettes de maintien (28.1, 28.2) formées sur l'élément de cadre (22) sont coudées en L au moyen d'une branche (27) coudée sur une plaque frontale (26).

3. Système de caniveau ou conduit de câbles selon la revendication 1 ou 2, **caractérisé en ce que** la taille de la région réceptrice (1) peut être ajustée au moyen des longueurs des branches de l'élément de complément (21) et/ou de l'élément de cadre (22).

4. Système de caniveau ou conduit de câbles selon l'une des revendications 1 à 3, **caractérisé en ce que** la partie inférieure de caniveau (10) peut être directement fixée sur une paroi.

5. Système de caniveau ou conduit de câbles selon l'une des revendications 1 à 3, **caractérisé en ce que** la partie inférieure de caniveau (10) peut être fixée sur une paroi par l'intermédiaire d'une console (30).

6. Système de caniveau ou conduit de câbles selon la revendication 5, **caractérisé en ce que** la console (30) comprend un bras en porte-à-faux (32) de longueur réglable.
